# DEMANDE DE BREVET EUROPEEN

(11) **EP 3 273 385 A1**
(43) Date de publication de la demande: **24.01.2018**
(21) Numéro de dépôt: 17181717.4
(22) Date de dépôt: 17.07.2017
(51) Int. Cl.: G06K 9/00

(54) **DISPOSITIF DE DÉTECTION DE SIÈGE LIBRE DANS UN COMPARTIMENT DE VÉHICULE DE TRANSPORT PUBLIC, NOTAMMENT DE VÉHICULE FERROVIAIRE**

(30) Priorité: 22.07.2016 FR 1657079
(71) Demandeur: ALSTOM Transport Technologies, 93400 Saint-Ouen (FR); IONODES Inc., Laval QC H7C 0A5 (CA)
(72) Inventeur: LE-BASTARD, Jean, 78000 Versailles (FR); TERRIER, Jean-Luc, 59880 Saint Saulve (FR); PARÉ, Stéphane, Laval, Québec H7K 3V6 (CA); TASSO, Eric, Montréal, Québec H9J 1S6 (CA)
(74) Mandataire: Lavoix

(57) **Abrégé**

Le dispositif (10) de détection comporte: un ensemble de dispositifs (12) de capture d'images, destinés à être fixés au plafond (6) du compartiment (5), de sorte que chaque siège (7) de la pluralité de sièges se trouve au moins partiellement dans le champ (14) d'au moins l'un des dispositifs de capture d'images (12), et des moyens (16) d'analyse d'image, propres à comparer au moins une partie de chaque image capturée par chaque dispositif de capture d'images (12) avec une image de référence propre à ce dispositif de capture (12), pour déduire si chaque siège (7) apparaissant dans le champ (14) de ce dispositif de capture (12) est libre ou occupé.

## Description

La présente invention concerne un dispositif de détection de siège libre dans un compartiment de véhicule de transport public, notamment de véhicule ferroviaire.

Afin d'améliorer la fluidité des déplacements de passagers dans un véhicule de transport public, il est intéressant que ceux-ci connaissent à l'avance l'emplacement des sièges libres dans un compartiment, pour se diriger directement vers l'un de ces sièges libres.

L'invention a notamment pour but de proposer un dispositif de détection de siège libre dans un compartiment, à la fois économique et simple à mettre en oeuvre.

A cet effet, l'invention a notamment pour objet un dispositif de détection de siège libre dans un compartiment de véhicule de transport public, notamment de véhicule ferroviaire, destiné à équiper un compartiment délimité en hauteur par un plafond et comprenant une pluralité de sièges, caractérisé en ce qu'il comporte :
- un ensemble de dispositifs de capture d'images, destinés à être fixés au plafond du compartiment, de sorte que chaque siège de la pluralité de sièges se trouve au moins partiellement dans le champ d'au moins l'un des dispositifs de capture d'images, et
- des moyens d'analyse d'image, propres à comparer au moins une partie de chaque image capturée par chaque dispositif de capture d'images avec une image de référence propre à ce dispositif de capture, pour déduire si chaque siège apparaissant dans le champ de ce dispositif de capture est libre ou occupé.

Les moyens d'analyse d'image sont propres à déterminer si un siège est libre ou occupé par une simple comparaison d'une image capturée sur laquelle apparaît ce siège avec une image de référence. L'image de référence est par exemple une image capturée préalablement par le même dispositif de capture alors que tous les sièges dans le champ de ce dispositif de capture sont libres.

Une telle analyse d'image ne nécessite pas de traitement complexe d'image, si bien qu'elle peut être effectuée à partir d'images de basse résolution, par exemple capturées par des caméras de surveillance classiques habituellement utilisées dans un tel compartiment.

L'invention peut donc réutiliser des caméras de surveillance classiques, toutefois disposées de manière adéquate pour que chaque siège se trouve dans le champ d'au moins une caméra, et n'implique donc pas de coûts importants.

Un dispositif de détection selon l'invention peut comporter en outre l'une ou plusieurs des caractéristiques suivantes, prises seules ou selon toutes combinaisons techniquement envisageables.
- A moins l'un des sièges se trouve au moins partiellement dans le champ d'au moins deux parmi les dispositifs de capture d'images, et les moyens d'analyse d'image déduisent qu'un siège est libre s'il apparaît comme libre sur chaque image des dispositifs de capture d'images pour lesquels ce siège est dans le champ.
- Le dispositif de détection comporte des moyens d'avertissement, notamment d'affichage, propres à indiquer, pour chaque siège, si ce siège est libre ou occupé.
- Le dispositif de détection comporte des moyens de surveillance connectés à au moins l'un des dispositifs de capture d'images.
- Chaque dispositif de capture d'images est configuré pour capturer régulièrement des images avec une période prédéfinie, par exemple une période de 1 ou 2 secondes.
- Chaque dispositif de capture d'images comporte des moyens de fixation au plafond, agencés de sorte que ce dispositif de capture d'images est orienté verticalement vers le bas lorsqu'il est fixé au plafond du compartiment.
- Chaque image de référence est une image capturée par le dispositif de capture correspondant lorsque tous les sièges se trouvant dans le champ de ce dispositif de capture sont libres, ou une image capturée précédemment.
- Les moyens d'analyse d'image sont propres à extraire au moins une région d'intérêt de chaque image capturée et de chaque image de référence, chaque région d'intérêt correspondant à un siège, par exemple à une assise et/ou à un dossier de ce siège, les moyens d'analyse d'image comparant les régions d'intérêt de chaque image capturée avec les régions d'intérêt correspondantes de l'image de référence correspondante.
- Les moyens d'analyse d'image sont configurés pour considérer comme libre un siège dont la région d'intérêt correspondante apparaît différemment sur l'image capturée et sur l'image de référence.

L'invention concerne également un compartiment de véhicule de transport public, notamment de véhicule ferroviaire, délimité en hauteur par un plafond et comprenant une pluralité de sièges, caractérisé en ce qu'il comporte un dispositif de détection de siège libre tel que défini précédemment, dont les dispositifs de capture d'images sont fixés au plafond, de sorte que chaque siège de la pluralité de sièges se trouve au moins partiellement dans le champ d'au moins l'un des dispositifs de capture d'images.

L'invention concerne enfin un procédé de détection de siège libre au moyen d'un dispositif de détection tel que défini précédemment, comportant :
- une étape de capture d'images, par chaque dispositif de capture d'images,
- une étape de comparaison de l'image capturée par chaque dispositif de capture d'images avec une image de référence propre à ce dispositif de capture d'images, et de déduction du caractère libre ou occupé de chaque siège apparaissant sur l'image capturée.

L'invention sera mieux comprise à la lecture de la description qui va suivre, donnée uniquement à titre d'exemple et faite en se référant aux figures annexées, parmi lesquelles :
- la figure 1 représente schématiquement, dans un plan longitudinal, un compartiment de véhicule de transport public équipé d'un dispositif de détection de siège libre selon un exemple de mode de réalisation de l'invention,
- la figure 2 représente les étapes d'un procédé de détection au moyen du dispositif de détection de la figure 1.

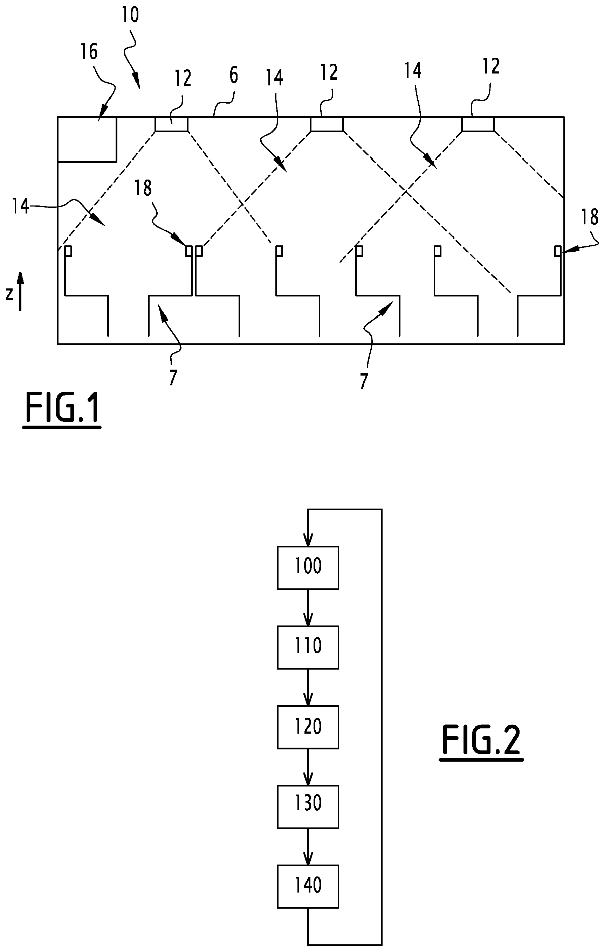

On a représenté, sur la figure 1, un compartiment 5 de véhicule de transport public. Par exemple, le compartiment 5 est un compartiment de véhicule ferroviaire.

Le compartiment 5 est délimité en hauteur, dans une direction verticale Z, par un plafond 6.

Le compartiment 5 comporte une pluralité de sièges 7, destinés à être occupés par des passagers du véhicule, ou à rester libre.

Afin d'améliorer la fluidité des déplacements des passagers lorsqu'ils montent dans le compartiment 5 à la recherche d'un siège libre, le compartiment 5 comporte un dispositif 10 de détection de siège libre.

Le dispositif de détection 10 comporte un ensemble de dispositifs 12 de capture d'images, fixés au plafond 6 du compartiment. Chaque dispositif de capture 12 présente un champ de capture 14, orienté vers les sièges 7, de sorte que chaque siège 7 de la pluralité de sièges se trouve au moins partiellement dans le champ de capture 14 d'au moins l'un des dispositifs de capture d'images 12.

Chaque dispositif de capture d'images 12 comporte des moyens de fixation au plafond 6, agencés de sorte que ce dispositif de capture d'images 12 est orienté verticalement vers le bas lorsqu'il est fixé au plafond 6 du compartiment 5. Ainsi, chaque dispositif de capture d'images 12 donne une vue de dessus de certains des sièges 7.

Cette disposition permet d'assurer que chaque siège 7 est visible par au moins un dispositif de capture d'images 12.

De préférence, les champs de capture 14 de deux dispositifs de capture d'images 12 adjacents se chevauchent. Dans ce cas, comme cela est représenté sur la figure 1, au moins l'un des sièges 7 se trouve au moins partiellement dans le champ 14 d'au moins deux parmi les dispositifs de capture d'images 12.

Chaque dispositif de capture d'images 12 est par exemple formé par une caméra de surveillance de type classique, par exemple analogique. Dans ce cas, chaque dispositif de capture d'images 12 est de préférence raccordé à un dispositif de surveillance classique, comprenant, par exemple, des moyens d'enregistrement des images capturées et/ou des moyens d'affichage des images capturées à destination de personnel de sécurité présent dans le véhicule ou à distance.

Une telle caméra de surveillance présente habituellement une basse résolution, donc est particulièrement économique, ce qui permet, à bas coût, de disposer une quantité de caméras suffisante dans le compartiment 5 pour couvrir tous les sièges 7.

Les dispositifs de capture d'images 12 étant fixés au plafond 6, généralement relativement bas, on choisira de préférence des dispositifs de capture 12 présentant chacun un grand angle de capture, pour que son champ de capture 14 couvre avantageusement plusieurs sièges 7.

Le dispositif de détection 10 comporte par ailleurs des moyens 16 d'analyse d'image, connectés aux dispositifs de capture d'images 12 de manière à collecter les images capturées.

Avantageusement, chaque dispositif de capture d'images 12 est configuré pour capturer régulièrement des images avec une période prédéfinie, par exemple une période de 1 ou 2 secondes. Chacune des images capturées est transmise aux moyens d'analyse 16, pour être analysée en temps réel.

Les moyens d'analyse 16 sont propres à comparer au moins une partie de chaque image capturée par chaque dispositif de capture d'images 12 avec une image de référence propre à ce dispositif de capture 12, pour déduire si chaque siège 7 apparaissant sur l'image est libre ou occupé.

A cet effet, chaque image de référence est par exemple une image capturée par le dispositif de capture 12 correspondant lorsque tous les sièges 7 se trouvant dans le champ 14 de ce dispositif de capture 12 sont libres.

En comparant une image capturée avec l'image de référence correspondante, par exemple en soustrayant l'image capturée de l'image de référence, les moyens d'analyse 16 sont propres à détecter les sièges libres et les sièges occupés.

En variante, l'image de référence est une image capturée précédemment, par exemple l'image capturée immédiatement avant la présente image capturée. Dans ce cas, les moyens d'analyse 16 déduisent un changement du caractère libre ou occupé du siège 7 s'ils détectent une différence entre le siège de l'image précédente et l'image présente.

Par exemple, les moyens d'analyse 16 sont configurés pour extraire au moins une région d'intérêt de chaque image capturée et de chaque image de référence, chaque région d'intérêt correspondant à un siège 7. Par exemple, une région d'intérêt correspond à une assise et/ou à un dossier de ce siège 7.

Les moyens d'analyse d'image 16 comparent alors les régions d'intérêt de chaque image capturée avec les régions d'intérêt correspondantes de l'image de référence correspondante, pour en déduire si un siège est libre ou occupé. Les moyens d'analyse d'image 16 sont configurés pour considérer comme libre un siège 7 dont la région d'intérêt correspondante apparaît différemment sur l'image capturée et sur l'image de référence (qui représente les sièges libres).

En effet, dans le cadre d'un véhicule de transport public, il suffit de constater si l'assise et/ou le dossier d'un siège 7 est masqué ou non sur une image capturée pour déduire si le siège est occupé ou non.

C'est cette simplicité des moyens d'analyse 16 qui permet d'utiliser des caméras de basse résolution.

De manière optionnelle, les moyens d'analyse d'image 16 sont propres à effectuer une analyse de reconnaissance de forme de tête, pour assurer qu'il s'agit bien d'un passager qui occupe un siège, et non un objet tel qu'une valise, un sac ou un manteau. Toutefois, cette option n'est pas indispensable dans le cadre d'une détection de siège libre dans un véhicule de transport public, et elle nécessite des caméras de meilleure résolution, donc plus coûteuses.

Il est à noter que, pour un siège 7 se trouvant dans les champs de capture 14 de deux dispositifs de capture 12 adjacents, les moyens d'analyse d'image 16 peuvent effectuer une double vérification, augmentant la précision de l'analyse d'image en permettant notamment de réduire les risques de faux positif.

A cet effet, les moyens d'analyse d'image 16 déduisent qu'un siège 7 est libre s'il apparaît comme libre sur chaque image des dispositifs de capture d'images 12 pour lesquels ce siège est dans le champ 14.

Ainsi, si un siège 7 est analysé comme libre sur une première image capturée par un premier dispositif de capture 12, et comme occupé sur une seconde image simultanée capturée par un second dispositif de capture 12, le siège 7 sera considéré comme occupé.

En variante, les moyens d'analyse 16 pourraient être configurés pour considérer comme libre un siège 7 dès lors qu'il est analysé comme libre sur l'une des images capturées.

Il est à noter que la détection de faux positifs n'est dans tous les cas pas cruciale dans le cadre de la détection de siège libre dans un compartiment de véhicule de transport public. En particulier, les captures d'images et leurs analyses étant réalisées régulièrement, notamment toutes les secondes ou toutes les deux secondes comme indiqué précédemment, un faux positif peut être corrigé dès la capture d'images suivante, ce qui n'entraine donc aucune conséquence notable.

Le dispositif de détection 10 selon l'invention comporte par ailleurs des moyens d'avertissement 18 propres à indiquer, pour chaque siège 7, si ce siège 7 est libre ou occupé, en fonction de l'analyse fournie par les moyens d'analyse 16.

Les moyens d'avertissement 18 comportent par exemple un indicateur lumineux disposé au-dessus de chaque siège 7, afin que chaque passager puisse déterminer à distance si le siège est libre ou occupé.

En variante ou de manière complémentaire, les moyens d'avertissement 18 comportent un panneau d'affichage, indiquant le caractère libre ou occupé de chaque siège du compartiment.

Le dispositif de détection 10 décrit précédemment permet de réaliser un procédé de détection de siège libre, qui va être décrit ci-dessous, notamment en référence à la figure 2.

Le procédé de détection selon l'invention comporte par exemple une étape préliminaire de capture d'images de référence. A cet effet, chaque dispositif de capture 12 capture une image alors que tous les sièges 7 dans son champ de capture 14 sont libres. Les images de référence sont stockées par les moyens d'analyse 16.

Lors de sa mise en oeuvre, le procédé de détection comporte une étape 100 de capture d'images, au cours de laquelle chaque dispositif de capture 12 capture une image, dite image capturée.

Le procédé comporte ensuite une étape 110 d'extraction d'au moins une région d'intérêt sur chaque image capturée, chaque région d'intérêt correspondant à un siège 7. Cette étape d'extraction 110 est réalisée par les moyens d'analyse 16. Par exemple, une région d'intérêt correspond à une assise et/ou à un dossier de ce siège 7.

Le procédé comporte ensuite une étape 120 de comparaison des régions d'intérêt de chaque image capturée avec les régions d'intérêt correspondantes de l'image de référence correspondante, pour en déduire si un siège est libre ou occupé.

Dans le cas où l'image de référence représente les sièges 7 libres, les moyens d'analyse d'image 16 sont configurés pour considérer comme libre un siège 7 dont la région d'intérêt correspondante apparaît différemment sur l'image capturée et sur l'image de référence.

Dans le cas où l'image de référence est une image précédemment capturée, les moyens d'analyse d'image 16 sont configurés pour modifier le caractère libre ou occupé d'un siège 7 lorsque la région d'intérêt correspondante apparaît différemment sur l'image capturée et sur l'image de référence. Ainsi, si le siège 7 était libre mais qu'une différence est détectée, ce siège 7 est maintenant considéré comme occupé, et vice-versa.

De manière optionnelle, dans le cas où un siège 7 est considéré comme occupé, le procédé comporte une étape complémentaire d'analyse de reconnaissance de forme de tête, pour assurer qu'il s'agit bien d'un passager qui occupe un siège, et non un objet tel qu'une valise, un sac ou un manteau.

Le procédé comporte également une étape 130 de vérification, pour chaque siège 7 se trouvant dans les champs de capture 14 de deux dispositifs de capture 12 adjacents. Au cours de cette étape, les moyens d'analyse d'image 16 déduisent qu'un siège 7 est libre s'il apparaît comme libre sur chaque image des dispositifs de capture d'images 12 pour lesquels ce siège est dans le champ 14.

En variante, les moyens d'analyse 16 pourraient être configurés pour considérer comme libre un siège 7 dès lors qu'il est analysé comme libre sur l'une des images capturées.

Le procédé comporte enfin une étape 140 d'avertissement, au cours de laquelle les moyens d'avertissement 18 indiquent, pour chaque siège 7, si ce siège 7 est libre ou occupé, en fonction de l'analyse fournie par les moyens d'analyse 16 au cours des étapes précédentes.

Afin d'avertir en temps réel de la disponibilité des sièges 7, le procédé revient ensuite à l'étape 100 de capture d'images. Les images sont ainsi capturées régulièrement avec une période prédéfinie, par exemple une période de 1 ou 2 secondes.

On notera que l'invention n'est pas limitée au mode de réalisation précédemment décrit, mais pourrait présenter diverses variantes sans sortir du cadre des revendications.

## Revendications

1. Dispositif (10) de détection de siège libre dans un compartiment (5) de véhicule de transport public, notamment de véhicule ferroviaire, destiné à équiper un compartiment (5) délimité en hauteur par un plafond (6) et comprenant une pluralité de sièges (7), **caractérisé en ce qu'**il comporte :
- un ensemble de dispositifs (12) de capture d'images, destinés à être fixés au plafond (6) du compartiment (5), de sorte que chaque siège (7) de la pluralité de sièges se trouve au moins partiellement dans le champ (14) d'au moins l'un des dispositifs de capture d'images (12), et
- des moyens (16) d'analyse d'image, propres à comparer au moins une partie de chaque image capturée par chaque dispositif de capture d'images (12) avec une image de référence propre à ce dispositif de capture (12), pour déduire si chaque siège (7) apparaissant dans le champ (14) de ce dispositif de capture (12) est libre ou occupé.

2. Dispositif de détection (10) selon la revendication 1, dans lequel :
- au moins l'un des sièges (7) se trouve au moins partiellement dans le champ (14) d'au moins deux parmi les dispositifs de capture d'images (12),
- les moyens d'analyse d'image (16) déduisent qu'un siège (7) est libre s'il apparaît comme libre sur chaque image des dispositifs de capture d'images (12) pour lesquels ce siège (7) est dans le champ (14).

3. Dispositif de détection (10) selon la revendication 1 ou 2, comportant des moyens d'avertissement (18), notamment d'affichage, propres à indiquer, pour chaque siège (7), si ce siège (7) est libre ou occupé.

4. Dispositif de détection (10) selon l'une quelconque des revendications précédentes, comportant des moyens de surveillance connectés à au moins l'un des dispositifs de capture d'images (12).

5. Dispositif de détection (10) selon l'une quelconque des revendications précédentes, dans lequel chaque dispositif de capture d'images (12) est configuré pour capturer régulièrement des images avec une période prédéfinie, par exemple une période de 1 ou 2 secondes.

6. Dispositif de détection (10) selon l'une quelconque des revendications précédentes, dans lequel chaque dispositif de capture d'images (12) comporte des moyens de fixation au plafond (6), agencés de sorte que ce dispositif de capture d'images (12) est orienté verticalement vers le bas lorsqu'il est fixé au plafond (6) du compartiment (5).

7. Dispositif de détection (10) selon l'une quelconque des revendications précédentes, dans lequel chaque image de référence est une image capturée par le dispositif de capture (12) correspondant lorsque tous les sièges (7) se trouvant dans le champ de ce dispositif de capture (12) sont libres, ou une image capturée précédemment.

8. Dispositif de détection (10) selon la revendication 7, dans lequel les moyens d'analyse d'image (16) sont propres à extraire au moins une région d'intérêt de chaque image capturée et de chaque image de référence, chaque région d'intérêt correspondant à un siège (7), par exemple à une assise et/ou à un dossier de ce siège, les moyens d'analyse d'image (16) comparant les régions d'intérêt de chaque image capturée avec les régions d'intérêt correspondantes de l'image de référence correspondante.

9. Dispositif de détection (10) selon la revendication 8, dans lequel les moyens d'analyse d'image (16) sont configurés pour considérer comme libre un siège (7) dont la région d'intérêt correspondante apparaît différemment sur l'image capturée et sur l'image de référence.

10. Compartiment (5) de véhicule de transport public, notamment de véhicule ferroviaire, délimité en hauteur par un plafond (6) et comprenant une pluralité de sièges (7), **caractérisé en ce qu'**il comporte un dispositif (10) de détection de siège libre selon l'une quelconque des revendications précédentes, dont les dispositifs de capture d'images (12) sont fixés au plafond (6), de sorte que chaque siège (7) de la pluralité de sièges se trouve au moins partiellement dans le champ (14) d'au moins l'un des dispositifs de capture d'images (12).

11. Procédé de détection de siège libre au moyen d'un dispositif de détection (10) selon l'une quelconque des revendications 1 à 9, comportant :
- une étape (100) de capture d'images, par chaque dispositif de capture d'images (12),
- une étape (120) de comparaison de l'image capturée par chaque dispositif de capture d'images (12) avec une image de référence propre à ce dispositif de capture d'images (12), et de déduction du caractère libre ou occupé de chaque siège (7) apparaissant sur l'image capturée.
